# EUROPÄISCHE PATENTSCHRIFT

(11) **EP 0 572 593 B1**
(45) Veröffentlichungstag und Bekanntmachung des Hinweises auf die Patenterteilung: **15.01.1997**
(21) Anmeldenummer: 92924609.8
(22) Anmeldetag: 27.11.1992
(51) Int. Cl.: B29C 41/46, B29C 41/06, B29C 33/04

(54) **VORRICHTUNG ZUM HERSTELLEN VON KUNSTSTOFF-FORMFOLIEN**
DEVICE FOR PRODUCING MOULDED PLASTIC FOILS
DISPOSITIF POUR LA FABRICATION DE FEUILLES MOULEES EN MATIERE PLASTIQUE

(30) Priorität: 19.12.1991 DE 4142109
(43) Veröffentlichungstag der Anmeldung: 08.12.1993
(73) Patentinhaber: Krauss-Maffei Aktiengesellschaft, 80997 München (DE)
(72) Erfinder: BAUER, Adolf, D-8037 Olching (DE)
(86) Internationale Anmeldenummer: EP9202734
(87) Internationale Veröffentlichungsnummer: WO9311921

(56) Entgegenhaltungen:
- EP-A- 0 502 378
- FR-A- 2 181 995
- US-A- 3 454 988

## Beschreibung

Die Erfindung betrifft eine Vorrichtung zum Herstellen von Kunststoff Formfolien mittels eines mit Hohlraum versehenen, rotierbaren Formwerkzeugs, dessen Formoberfläche durch die wechselnde Befüllung des Hohlraumes mit fluidem Heizmedium und fluidem Kühlmedium in wechselnder Abfolge aufheizbar und abkühlbar ist, und dessen Forminnenraum mit fluidem, auf der augeheizten Formoberfläche aufschmelzbarem Thermoplast-Kunststoff befüllbar ist, wobei nach dem Abkühlen aus dem geöffneten Formwerkzeug eine auf der abgekühlten Formoberfläche gebildete Kunststoff-Formfolie entnehmbar ist und wobei die die Formoberfläche bildende Formwandung des Formwerkzeugs aus einem anderen Material als die übrigen Gehäusewandungen des Hohlraumes besteht.

Ein Vorrichtung dieser Art ist aus der US-A-3,454,988 bekannt, bei der jede Formhälfte im wesentlichen aus zwei Teilen besteht, der Formwandung und den Seitenwänden einerseits und der Verschlußplatte mit dem Flanschrand andererseits. Beide Teile sind mittels Schrauben unter Zwischenlage von Dichtungen und einer Flüssigkeitsverteilerplatte miteinander verschraubt. Diese Vorrichtung hat aufgrund hoher Wandstärken und der Schraubflansche eine verhältnismäßig große Masse mit entsprechend großer Wärmekapazität, wodurch sich bei der Herstellung der Kunststoffteile aufgrund der langen Aufheiz- und Abkühlphasen jeweils lange Zykluszeiten ergeben und ein hoher Energiebedarf gegeben ist.

Aus der DE-OS-34 17 727 ist ferner eine Vorrichtung zum Herstellen von Kunststoff-Formfolien bekannt, bei der das Formwerkzeug bzw. die Gießform in einem Ofen aufgeheizt wird und nach Erreichen der Betriebstemperatur der nächsten Betriebsstation, der Beschickungsstation zugeführt wird, in der das Formwerkzeug an einen, einen fluiden Thermoplast-Kunststoff enthaltenden Behälter angekoppelt wird.

Die Beheizung des Formwerkzeugs mit heißer Umluft erfordert einen großen Energie- und Zeitaufwand, da neben den beträchtlichen Luftmengen und dem Formwerkzeug auch zugehörige Halterungselemente aufgeheizt werden müssen. Die Beheizung mit Umluft hat darüber hinaus den Nachteil, daß Rückstandspartikel von der im vorangegangenen Arbeitsschritt vom abgekühlten Formwerkzeug getrennten Kunststoff-Formfolie in die Umluft gelangen und sich auf der formgebenden Oberfläche des Formwerkzeugs wieder absetzen können.

Aus der französischen Patentschrift 1 600 351 ist es ferner auch bekannt, ein biaxial drehbares, geschlossenes Formwerkzeug von außen mittels eines Infrarotstrahlers aufzuheizen, so daß der in dem Formwerkzeug befindliche pulverförmige Kunststoff sich gleichförmig auf der Forminnenfläche verteilt, dort aufschmilzt und nach dem Abkühlen des Formwerkzeugs als Kunststoff-Formfolie entnommen werden kann Auch diese Betriebsart erfordert in der Abfolge des Aufheizens und Abkühlens einen hohen Energie- und Zeitaufwand.

Der Erfindung liegt die Aufgabe zugrunde, eine Vorrichtung der eingangs genannten Art so auszubilden, daß bei geringem Energieaufwand eine schnelle Abfolge zwischen Aufheizen und Abkühlen des Formwerkzeugs erreicht wird und das Formwerkzeug den damit einhergehenden rasch wechselnden Wärmedehnungen standhalten kann.

Die Lösung der Aufgabe ist in Anspruch 1 angegeben.

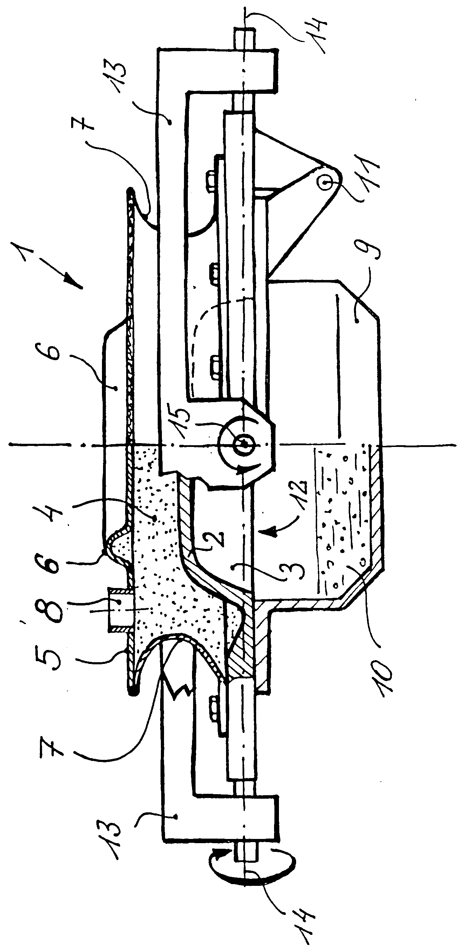

Eine Ausführungsform der Erfindung wird anhand der Zeichnung näher erläutert, die ein teilweise geschnitten dargestelltes Formwerkzeug mit geschlossenem Formhohlraum und zwei Drehachsen in schematischer Darstellung zeigt.

Die Zeichnung zeigt ein Formwerkzeug 1, bestehend aus einer Formwandung 2, die aus einem in einem galvanischen Prozeß verarbeitbaren Material, z.B. einer Nickel-Kupfer-Legierung besteht. Nach diesem Verfahren kann die Formoberfläche 3 mit einer Narbung versehen werden, wie sie z.B. bei Armaturentafeln von Personenkraftwagen üblich ist. Hinter der Formwandung 2 befindet sich ein Hohlraum 4, der zum Teil von der Formwandung 2 und im übrigen von Gehäusewandungen 5 aus Stahlblech umschlossen wird. Die Gehäusewandungen 5 besitzen Wölbungen 6 und 7 und sind an der Formwandung 2 abdichtend befestigt. Die Gehäusewandung 5 besitzt ferner einen Anschlußstutzen 8 zum Anschluß an Heiz- und Kühlmedien enthaltende Behälter (nicht dargestellt), aus denen der Hohlraum 4 in abwechselnder Abfolge befüllbar ist. Die Heiz- und Kühlmedien bestehen vorzugsweise aus Öl.

Das Formwerkzeug 1 ist mit einem Pulverbehälter 9 verbunden, der fluiden Thermoplast-Kunststoff, vorzugsweise Thermoplast-Kunststoffpulver 10 enthält. Der Pulverbehälter 9 ist beispielsweise mittels eines Klappgelenkes 11 lösbar am Formwerkzeug 1 befestigt, wodurch der Forminnenraum 12 zugänglich gemacht werden kann. Das Formwerkzeug 1 ist in einem Tragrahmen 13 gehalten, in dem es um eine erste Drehachse 14 drehbar gelagert ist. Der Tragrahmen 13 hingegen ist um eine zweite, zur ersten Drehachse 14 senkrecht stehende zweite Drehachse 15 drehbar, so daß das Formwerkzeug 1 biaxial rotierbar gelagert ist.

Im Betrieb wird zunächst der Hohlraum 4 des mit dem Pulverbehälter 9 verbundenen Formwerkzeugs 1 mit Heizmedium befüllt, worauf das Formwerkzeug 1 um die zwei Drehachsen 14, 15 gedreht wird. Infolge dieser biaxialen Drehung wird das Thermoplast-Kunststoffpulver 10 gleichmäßig auf der Formoberfläche 3 verteilt und schmilzt dort schichtmäßig auf. Anschließend wird der Hohlraum 4 mit Kühlmedium befüllt, worauf die auf der Fromoberfläche 3 aufgeschmolzene Schicht zu einer Kunststoff-Formfolie (nicht dargestellt) erstarrt, die sodann nach dem Wegklappen des Pulverbehälters 9 aus dem Formwerkzeug 1 entnommen werden kann.

Die im Betrieb sich im Formwerkzeug 1 einstellenden Wärmedehnungen, die sich zum einen aufgrund der abwechselnden Befüllung mit Heiz- und Kühlmedium und zum anderen aufgrund der unterschiedlichen Materialbeschaffenheit der Formwandung (Nickel-Kupfer-Legierung) und des Hohlraum-Gehäuses (Stahlblech) ergeben, werden durch die in den Gehäusewandungen 5 ausgebildeten Wölbungen 6, 7 kompensiert.

## Patentansprüche

1. Vorrichtung zum Herstellen von Kunststoff-Formfolien mittels eines mit Hohlraum (4) versehenen, rotierbaren Formwerkzeugs, dessen Formoberfläche (3) durch die wechselnde Befüllung des Hohlraumes (4) mit fluidem Heizmedium und fluidem Kühlmedium in wechselnder Abfolge aufheizbar und abkühlbar ist, und dessen Forminnenraum (12) mit fluidem, auf der augeheizten Formoberfläche aufschmelzbarem Thermoplast-Kunststoff befüllbar ist, wobei nach dem Abkühlen aus dem geöffneten Formwerkzeug (1) eine auf der abgekühlten Formoberfläche (3) gebildete Kunststoff-Formfolie entnehmbar ist und wobei die die Formoberfläche bildende Formwandung (2) des Formwerkzeugs (1) aus einem anderen Material als die übrigen Gehäusewandungen des Hohlraumes (4) besteht, **dadurch gekennzeichnet**, daß die die Formoberfläche (3) bildende Formwandung (2) aus galvanischem Material, z.B. einer Nickel Kupfer-Legierung besteht, und die übrigen Gehäusewandungen (5) des Hohlraumes (4) aus Stahlblech bestehen und mit Wölbungen (6,7) zur Kompensation unterschiedlicher Längendehnungen zwischen der Formwandung (2) und der übrigen Gehäusewandung (5) versehen sind.

## Claims

1. Device for producing moulded plastic foils by means of a rotatable moulding tool provided with a chamber (4), the mould surface (3) of which can be heated and cooled in turn by alternately filling the chamber (4) with a fluid heating agent and a fluid cooling agent, and the inner cavity (12) of which can be filed with fluid thermoplastic material able to melt on the heated mould surface, in which after cooling a moulded plastic foil formed on the cooled mould surface (3) can be removed from the opened moulding tool (1) and the mould wall (2) of the moulding tool (1) forming the mould surface is made of a different material than the other housing walls of the chamber (4), **characterised in that** the mould wall (2) forming the mould surface (3) is made of galvanic material, e.g. a nickel-copper alloy and the other housing walls (5) of the hollow chamber (4) are made of sheet steel and are provided with convexities (6, 7) to compensate different linear strains between the mould wall (2) and the other housing wall (5).

## Revendications

1. Dispositif pour la fabrication de feuilles moulées en matière plastique au moyen d'un outil de moulage rotatif, doté d'un espace creux (4) dont la surface de moule (3) peut être alternativement chauffée et refroidie grâce au remplissage de l'espace creux (4) alternativement par un fluide de chauffage et par un fluide de refroidissement, et dont l'espace intérieur (12) de moule peut être rempli d'une matière thermoplastique fluide susceptible de fondre sur la surface chauffée du moule, une feuille moulée de matière plastique formée sur la surface (3) du moule refroidie, pouvant être retirée de l'outil de moulage ouvert, après le refroidissement, et la paroi (2) de moule ou de l'outil (1) de moulage, formant la surface de moulage, étant constituée d'un autre matériau que celui constituant les autres parois formant le corps de l'espace creux (4), dispositif caractérisé en ce que la paroi (2) de moulage formant la surface (3) du moule, est constituée d'un matériau galvanique, par exemple un alliage nickel-cuivre et en ce que les autres parois (5) de corps de l'espace creux (4) sont en tôle d'acier et sont dotées de parties bombées (6, 7) en vue de la compensation des différences de dilatation linéaire entre la paroi (2) de moulage et les autres parois (5) de corps.
